# FASCICULE DE BREVET EUROPEEN

(11) **EP 2 422 877 B1**
(45) Date de publication et mention de la délivrance du brevet: **05.10.2016**
(21) Numéro de dépôt: 11178824.6
(22) Date de dépôt: 25.08.2011
(51) Int. Cl.: B01J 38/08, B01J 38/02, B01D 53/86

(54) **Procédé de régénération d'un catalyseur de dénitrification**
Regenerierungsverfahren für einen Denitrifikationskatalysator
Method for regenerating a denitrification catalyst

(30) Priorité: 26.08.2010 FR 1056778
(43) Date de publication de la demande: 29.02.2012
(73) Titulaire: LAB SA, 69007 Lyon (FR)
(72) Inventeur: Siret, Bernard, 69200 VENISSIEUX (FR); Tabaries, Franck, 83190 OLLIOULES (FR)
(74) Mandataire: Lavoix

(56) Documents cités:
- EP-A1- 1 576 999
- EP-A1- 2 011 559
- EP-A2- 2 151 272
- US-A1- 2001 001 435
- US-A1- 2004 098 979
- US-A1- 2004 098 980
- US-A1- 2008 089 822

## Description

La présente invention concerne un procédé de régénération d'un catalyseur de dénitrification, ainsi qu'une installation de mise en oeuvre de ce procédé.

L'invention s'applique en particulier à l'épuration de fumées contenant des gaz acides et des oxydes d'azote.

Lors de l'incinération de déchets ménagers ou de boues de stations d'épuration par exemple, les fumées issues de la combustion contiennent une quantité appréciable d'éléments nocifs comme le chlorure d'hydrogène (HCl), le dioxyde de soufre (SO₂), des poussières, des métaux lourds, ainsi que des composés organiques, tels que des dioxines et des furanes, et des oxydes d'azote. Avant de pouvoir être rejetées à l'atmosphère, ces fumées de combustion doivent être épurées. Plusieurs procédés peuvent être utilisés et sont proposés de manière commerciale. Il est ainsi habituel, pour des raisons technologiques, d'effectuer séparément les opérations de dénitrification (deNOx) de celles d'élimination des autres polluants comme le chlorure d'hydrogène, le dioxyde de soufre et les métaux lourds.

Plusieurs technologies sont disponibles pour effectuer une dénitrification. Parmi elles, la dénitrification par catalyseur, dite « SCR » ou par réduction catalytique sélective, occupe une place de choix tant pour ses performances en dénitrification que pour sa capacité à aussi traiter les dioxines et les furanes. Dans cette technologie, les fumées à épurer passent à travers un réacteur catalytique qui réduit les oxydes d'azote par réaction avec de l'ammoniac ou un autre réactif.

Usuellement, il faut veiller à protéger le catalyseur contre un certain nombre de poisons et éviter la formation de sels tels que le bisulfate d'ammonium, qui encrassent le catalyseur. La dénitrification par catalyseur peut être réalisée en amont ou bien en aval des autres unités qui épurent les fumées des autres composants nocifs qu'elles contiennent initialement, comme les poussières et les oxydes de soufre. On peut par ailleurs choisir d'opérer à une température relativement élevée, par exemple entre 250 et 350°C, ou bien à une température relativement basse, par exemple entre 170 et 250°C. Une contrainte de la dénitrification catalytique vient du fait que le réactif usuellement utilisé réagit avec les oxydes de soufre encore présents au niveau du réacteur catalytique et peut y déposer les sels comme le sulfate ou le bisulfate d'ammonium, ce qui bloque les pores du catalyseur. D'autres sels, par exemple des chlorures métalliques, peuvent également se déposer. D'autre part, les fumées peuvent aussi véhiculer des poisons, comme par exemple de l'arsenic ou du phosphore, qui désactivent le catalyseur.

Lorsqu'on place les catalyseurs en amont de filtres ou de laveurs, à un endroit où la température est encore élevée, on peut économiser les réchauffeurs et échangeurs autrement nécessaires. En revanche, les fumées non traitées contiennent encore une quantité de poussières importante, ce qui oblige au moins à sélectionner des catalyseurs à canal plus ouvert et interdit pratiquement l'utilisation de catalyseurs en granulés. De plus, la teneur encore importante en oxydes de soufre peut aggraver le risque de dépôt de sels sur le catalyseur.

Pour cette raison, on choisit souvent de placer l'unité catalytique de dénitrification en aval d'autres unités assurant l'élimination des poussières et des gaz acides, comme des laveurs ou des filtres. Si on opère à relativement haute température, par exemple entre 250 et 350 °C, on bénéficie d'une sécurité supplémentaire vis-à-vis de l'empoisonnement ou du dépôt de sels, mais il est nécessaire de remonter la température des fumées depuis celle où opère le laveur, par exemple vers 65°C, ou le filtre à manches, par exemple entre 120 et 200°C, jusqu'à la température de service de l'unité catalytique de dénitrification : cela oblige à installer des échangeurs récupérateurs de chaleur, qui sont coûteux et eux-mêmes sujet à encrassement. Si on choisit d'opérer à basse température, par exemple entre 170 et 250°C, il est possible, au prix d'un volume supérieur de catalyseur de dénitrification, d'économiser les échangeurs récupérateurs précités, ce qui conduit à des investissements moindres mais rend le catalyseur plus sensible aux poisons.

Toutefois, quelque soit la solution retenue, la perte d'activité du catalyseur, plus ou moins rapide, reste inéluctable. Il y a donc lieu de procéder à des régénérations régulières de ce catalyseur. Ces régénérations sont effectuées hors ligne et plusieurs techniques sont actuellement employées. On peut ainsi procéder à un soufflage ou à un lavage suivi d'un séchage. La régénération est généralement effectuée dans des usines spécialisées, après démontage et transport des modules de catalyseur. Une autre possibilité consiste à procéder à une régénération par chauffage hors ligne, c'est-à-dire en isolant un ou plusieurs modules de catalyseur et en élevant leur température par tout moyen approprié. Dans tous les cas, les opérations de régénération sont réalisées hors ligne, de sorte que la production de l'installation de traitement des fumées, à laquelle appartient l'unité catalytique de dénitrification, est nécessairement stoppée ou significativement amoindrie.

Pour contourner cet inconvénient, US-A-2008/089822 propose de régénérer en ligne un catalyseur de dénitrification. Pour cela, alors que des fumées à dénitrifier sont mélangées à de l'ammoniac et envoyées au catalyseur pour y être épurées, on augmente leur température, notamment à l'aide d'un brûleur, en passant ainsi cette dernière d'une valeur initiale de 190°C environ à une valeur finale de plus de 280°C. La chaleur excédentaire des fumées régénère en partie le catalyseur, en volatilisant les sels d'ammoniac qui s'étaient déposés et accumulés jusqu'alors. Pour commander cette régénération, US-A-2008/089822 prévoit de mesurer, en aval du catalyseur, la teneur des fumées traitées en certains polluants gazeux, dont l'ammoniac : cette mesure est utilisée pour, d'une part, réduire la quantité d'ammoniac frais, introduite en amont du catalyseur, et, d'autre part, piloter la vitesse d'échauffement des fumées par le brûleur. Dans US-A-2008/089822, on arrête la régénération lorsque la quantité d'ammoniac frais, introduite en amont du catalyseur, retrouve sensiblement sa valeur d'avant la régénération, tout en prévoyant en plus de maintenir l'action du brûleur pendant une durée additionnelle de sécurité, dont la valeur est prédéterminée à, par exemple, deux heures. Ainsi, US-A-2008/089822 privilégie l'optimisation de sa consommation en ammoniac, au détriment de la performance de régénération de son catalyseur : en effet, en surveillant exclusivement les polluants gazeux aval, on ne peut garantir qu'une régénération partielle, liée uniquement à la volatilisation des polluants ammoniaqués surveillés. Cela pourrait expliquer pourquoi US-A-2008/089822 a explicitement prévu la durée de sécurité précitée. Quoi qu'il en soit, US-A-2008/089822 est muet en ce qui concerne les sels susceptibles de se recombiner sous forme particulaire au refroidissement, en particulier certains chlorures métalliques comme PbCl₂ et ZnCl₂, poisons effectifs des catalyseurs de dénitrification, qui, après s'être accumulés sur le catalyseur pendant le fonctionnement de ce dernier à la température de service, vont être relargués sous l'action de la chaleur pendant la régénération puis, en se refroidissant, vont se recombiner sous forme de poussières en aval du catalyseur, sans jamais que la présence de telles poussières ne puisse être détectée par l'unité de mesure aval de US-A-2008/089822, ni même soupçonnée à la lecture des explications fournies par ce document.

Ainsi, aussi bien pour US-A-2008/089822, que pour les procédés de régénération hors ligne évoqués plus haut, on ne dispose d'aucun moyen fiable pour évaluer immédiatement si la régénération réalisée a été suffisamment efficace, par exemple pour savoir au bout de quelle durée minimale les opérations de régénération peuvent être stoppées tout en ayant la garantie d'avoir suffisamment « décrassé » le catalyseur.

Le but de la présente invention est de proposer un procédé amélioré pour régénérer un catalyseur de dénitrification, qui soit moins perturbateur pour la production de fumées dénitrifiées et plus fiable quant à la qualité de la régénération obtenue.

A cet effet, l'invention a pour objet des procédés de régénération d'un catalyseur de dénitrification, tels que respectivement définis aux revendications 1 et 2.

Une des idées à la base de l'invention est de chercher à régénérer en ligne le catalyseur de dénitrification, c'est-à-dire à régénérer ce catalyseur alors que le flux des fumées à dénitrifier à l'aide de ce catalyseur est maintenu à travers le catalyseur. Pour ce faire, l'invention prévoir de traiter thermiquement le catalyseur, par le biais des fumées à dénitrifier le traversant. Plus précisément, des brûleurs sont utilisés pour augmenter la température des fumées à dénitrifier, par rapport à leur température constatée lors de la marche en conditions normales : la température des fumées passe alors d'une valeur prédéterminée de marche normale, comprise entre 170°C et 280°C, à une valeur augmentée, comprise entre 240°C et 380°C. En pratique, l'élévation de température est au moins supérieure à 10°C, typiquement de l'ordre de 50°C, voire davantage. Sous l'action de cette chaleur excédentaire transportée par les fumées à dénitrifier, le catalyseur se régénère, en rejetant des composés qui, par accumulation, tendaient jusqu'alors à le désactiver. L'invention prévoit également de mesurer, en aval du catalyseur, la teneur des poussières présentes dans les fumées dénitrifiées : lors de l'élévation de la température des fumées due à l'action des brûleurs, on constate ainsi l'augmentation de la teneur des poussières provenant des composés relargués par le catalyseur. On notera que le suivi de ces poussières est un indicateur fiable de la performance de la régénération : en effet, quelque soit la nature des sels et autres poisons accumulés dans le catalyseur, on les retrouve en partie sous forme de poussières en aval du catalyseur en cours de régénération, la quantité de ces poussières étant facilement et efficacement mesurable. De surcroît, selon l'invention, on surveille que cette mesure est d'abord croissante, puis décroissante au cours de la régénération, ce qui garantit que, quand bien même certains éléments relargués par le catalyseur seraient encore sous forme gazeuse à l'endroit précis où on réalise la mesure, les poussières présentes et mesurées à l'endroit précité représentent une information quantifiable à la fois fiable et efficace pour commander l'arrêt de la régénération. Ainsi, selon l'invention, on maintient l'action des brûleurs tant que la teneur en poussières mesurée n'est pas repassée sous un seuil préfixé qui, selon l'invention, vaut 20 mg/Nm³, voire 10 mg/Nm³, secs corrigés à la valeur de référence en oxygène. Dans le contexte industriel habituel de l'invention, les brûleurs restent ainsi activés pendant plusieurs dizaines de minutes, voire plusieurs heures. Ainsi, la production de fumées dénitrifiées n'est pas arrêtée pendant la régénération du catalyseur, tout en garantissant que la régénération réalisée a été efficace. Autrement dit, pour résumer, l'invention propose de suivre les composés particulaires car seul un tel suivi est à même de pouvoir contrôler le bon déroulement de la phase de régénération, à cause des polluants présents qui peuvent se recombiner sous forme particulaire.

Des caractéristiques additionnelles avantageuses du procédé conforme à l'invention, prises isolément ou selon toutes les combinaisons techniquement possibles, sont spécifiées aux revendications dépendantes.

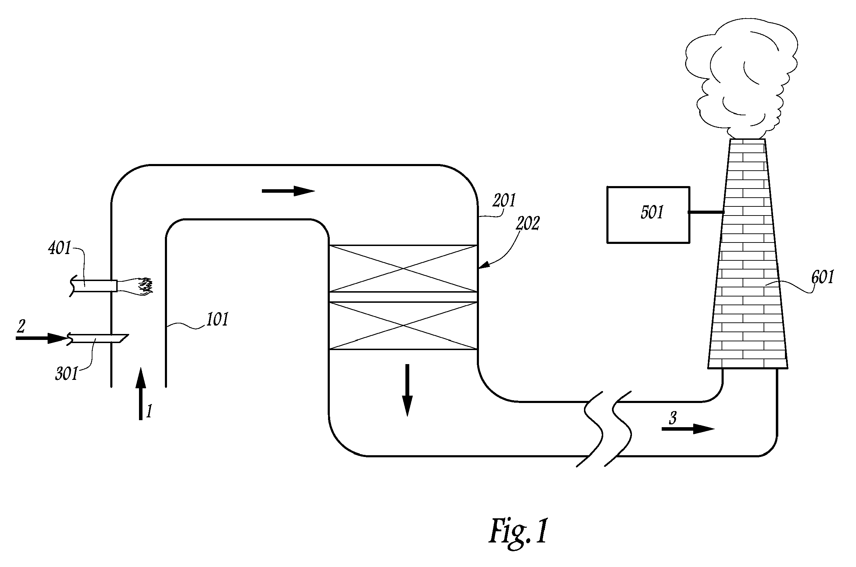

L'invention sera mieux comprise à la lecture de la description qui va suivre, donnée uniquement à titre d'exemple et faite en se référant à l'unique figure 1 qui est une vue schématique d'une installation conforme à l'invention.

Sur la figure 1 est représentée une installation de traitement de fumées de combustion 1. Ces fumées 1 sont introduites à un réacteur 202 contenant un catalyseur de dénitrification, par le biais de conduites 101 et 201. En pratique, des éléments, non représentés, sont généralement présent dans les conduites 101 et 102 pour permettre une meilleure aéraulique, comme par exemple des aubages ou des mélangeurs statiques assurant un brassage des fumées 1.

Les fumées 1 envoyées au réacteur catalytique 202 présentent une température comprise entre 170°C et 280°C, de préférence entre 210°C et 280°C, voire de préférence entre 220°C et 250°C. Il est à noter que ces fumées 1 sont les fumées normalement produites par une unité de combustion amont, par opposition à un flux d'air chaud. Ces fumées contiennent donc en particulier des oxydes d'azote, ainsi que l'ensemble des polluants auxquels le catalyseur 202 est normalement exposé.

Selon l'invention, alors que le réacteur catalytique 202 est en service, à savoir qu'un réactif 2 de destruction des oxydes d'azote, pouvant être constitué d'ammoniac ou d'une solution d'urée par exemple, est introduit dans les fumées 1 par un moyen d'introduction 301 débouchant dans la conduite 101, constitué de buses de pulvérisation par exemple, on élève la température des fumées 1 à une température d'au moins 240°C, de préférence d'au moins 280°C, et d'au plus 380°C à l'aide d'un ou de plusieurs brûleurs 401 utilisant du gaz naturel, du propane, du butane ou du fuel. On peut donc considérer que, durant le processus de régénération qui va être décrit ci-après, la dénitrification catalytique par le réacteur 202 fonctionne dans des conditions normales, si ce n'est la température plus élevée des fumées 1 envoyées au réacteur 202.

En pratique, les brûleurs 401 peuvent être intégrés à demeure au sein de l'installation, en étant notamment prévus amovibles par rapport à la conduite 101. En variante, ces brûleurs sont rapportés à l'installation, en étant installés temporairement pour les fins d'une régénération.

Consécutivement à l'élévation de la température des fumées 1, le réacteur catalytique 202 rejette des poisons et/ou des sels qui désactivaient son catalyseur et, ainsi, regagne progressivement son activité catalytique. Un composé typique qui est ainsi relargué par le catalyseur est le bisulfate d'ammonium (NH₄HSO₄), mais bien d'autres composés volatiles et sels, y compris des sels métalliques, sont désorbés, évaporés ou sublimés.

L'avantage, par rapport à l'état de l'art traditionnel qui consiste soit à arrêter la ligne et à procéder à une régénération dans une usine spécialisée externe, soit à arrêter la ligne et à élever la température grâce à des brûleurs mais sans faire passer à travers le catalyseur les fumées 1 ni le réactif de dénitrification 2, est évident car, comme l'installation n'est pas arrêtée, aucune perte de production n'est à déplorer.

Avantageusement, les brûleurs 401 crachent leurs gaz chauds de manière transversale, perpendiculairement à l'écoulement des fumées 1 dans la conduite 101. De la sorte, le mélange entre les fumées 101 et les gaz chauds est renforcé.

Selon une autre caractéristique de l'invention, on mesure en permanence la teneur en poussières à l'aide d'un analyseur en continu 501 situé en aval du réacteur catalytique 202, de préférence au niveau d'une cheminée 601 de dispersion finale des fumées. Lors de la régénération, quand les divers polluants sont désorbés du catalyseur, ces polluants se retrouvent, en aval du réacteur catalytique 202, en partie sous forme de poussières, soit dès qu'ils sont rejetés du réacteur, soit après qu'ils se soient recombinés entre eux, notamment suite à leur refroidissement. On assiste donc à une augmentation de la teneur en poussières des fumées 3 en aval du réacteur catalytique, cette augmentation étant détectée par l'analyseur 501. Le suivi de la concentration en poussières en fonction du temps permet donc de suivre la progression du processus de régénération, et ainsi de déterminer le moment où ce processus peut être arrêté. En effet, on comprend que, lorsque la régénération a été suffisamment efficace, le réacteur catalytique 202 cesse de rejeter ces polluants et la teneur en poussières, mesurée par l'analyseur 501, repasse à sa valeur de référence, c'est-à-dire la valeur usuellement constatée lors de la marche en conditions normales de température pour le réacteur 202.

En variante, plutôt que l'analyseur 501 soit situé dans la cheminée de dispersion finale 601, il est possible de mesurer la teneur en poussières en n'importe quel endroit en aval du réacteur catalytique 202, pas uniquement à la cheminée 601.

Aussi, selon l'invention, on arrête le processus de régénération, c'est-à-dire qu'on éteint les brûleurs 401, quand la teneur en poussières mesurée par l'analyseur 501 redescend à moins que de 20 mg/Nm³ secs de poussières, de préférence à moins de 10 mg/Nm³ secs. Ces valeurs de teneurs en poussières sont exprimées sur base sèche, dans les conditions dite normales de température et de pression (0°C et 101.3 kPa) et corrigées à une valeur de référence en oxygène. Par exemple, pour le cas de l'incinération de déchets, cette valeur de référence est 11 % en volume d'oxygène.

En pratique, la mise en oeuvre du procédé de régénération qui vient d'être décrit est réalisée de façon manuelle. Bien entendu, une automatisation de commande est toujours possible.

## Revendications

1. Procédé de régénération d'un catalyseur de dénitrification, dans lequel, pendant que des fumées à dénitrifier (1), qui présentent une température comprise entre 170°C et 280°C, et dans lesquelles est introduit un réactif de dénitrification (2), sont envoyées à travers le catalyseur à régénérer,
on élève la température de ces fumées, à une valeur comprise entre 240°C et 380°C, à l'aide d'au moins un brûleur (401) tant que la teneur en poussières, qu'on mesure en permanence en aval du catalyseur, n'est pas successivement passée au-dessus puis au-dessous de 20 mg/Nm³ secs, mesurés dans les conditions normales de température et de pression et corrigés à une valeur de référence en oxygène.

2. Procédé de régénération d'un catalyseur de dénitrification, dans lequel, pendant que des fumées à dénitrifier (1), qui présentent une température comprise entre 170°C et 280°C, et dans lesquelles est introduit un réactif de dénitrification (2), sont envoyées à travers le catalyseur à régénérer,
on élève la température de ces fumées, à une valeur comprise entre 240°C et 380°C, à l'aide d'au moins un brûleur (401) tant que la teneur en poussières, qu'on mesure en permanence en aval du catalyseur, n'est pas successivement passée au-dessus puis au-dessous de 10 mg/Nm³ secs, mesurés dans les conditions normales de température et de pression et corrigés à une valeur de référence en oxygène.

3. Procédé suivant l'une des revendications 1 ou 2, dans lequel les fumées de dénitrifier (1) présentent une température comprise entre 210°C et 280°C, de préférence entre 220°C et 250°C, et dans lequel on élève la température de ces fumées à une valeur comprise entre 280° et 380°C.

4. Procédé suivant l'une quelconque des revendications précédentes, dans lequel on alimente le ou les brûleurs (401) par du propane, du butane, du gaz naturel ou du fuel.

5. Procédé suivant l'une quelconque des revendications précédentes, dans lequel on fait cracher le ou les brûleurs (401) suivant une direction transversale à la direction d'écoulement des fumées (1).

6. Procédé suivant l'une quelconque des revendications précédentes, dans lequel on mesure la teneur en poussières au niveau d'une cheminée (601) de dispersion finale des fumées (1).

7. Procédé suivant l'une quelconque des revendications précédentes, dans lequel la valeur de référence en oxygène est 11% en volume d'oxygène.

## Patentansprüche

1. Verfahren zum Regenieren eines Denitrifikationskatalysators, bei dem während die zu denitrierenden Rauchgase (1), die eine Temperatur zwischen 170°C und 280°C aufweisen und in die ein Denitrifikationsreaktionsmittel (2) eingeführt wird, durch den zu regenerierenden Katalysator hindurch geschickt werden,
die Temperatur dieser Rauchgase auf einen Wert zwischen 240°C und 380°C mittels mindestens eines Brenners (401) angehoben wird, solange der Staubgehalt, der ständig stromabwärts zum Katalysator gemessen wird, nicht nacheinander über 20 mgNm³ sec und dann darunter gehen, gemessen bei den normalen Bedingungen der Temperatur und des Drucks und korrigiert auf einen Referenzwert an Sauerstoff.

2. Verfahren zum Regenieren eines Denitrifikationskatalysators, bei dem während die zu denitrierenden Rauchgase (1), die eine Temperatur zwischen 170°C und 280°C aufweisen und in die ein Denitrifikationsreaktionsmittel (2) eingeführt wird, durch den zu regenerierenden Katalysator hindurch geschickt werden,
die Temperatur dieser Rauchgase auf einen Wert zwischen 240°C und 380°C mittels mindestens eines Brenners (401) angehoben wird, solange der Staubgehalt, der ständig stromabwärts zum Katalysator gemessen wird, nicht nacheinamder über 10 mgNm³ sec und dann darunter gehen, gemessen bei den normalen Bedingungen der Temperatur und des Drucks und korrigiert auf einen Referenzwert an Sauerstoff.

3. Verfahren nach einem der Ansprüche 1 oder 2, bei dem die zu denitrierenden Rauchgase (1) eine Temperatur zwischen 210°C und 280°C, vorzugsweise zwischen 220°C und 250°C aufweisen, und bei dem die Temperatur dieser Rauchgase auf einen Wert zwischen 280°C und 380°C angehoben werden.

4. Verfahren nach einem beliebigen der vorhergehenden Ansprüche, bei dem der oder die Brenner (401) mit Propan, Butan, Naturgas oder Kraftstoff versorgt werden.

5. Verfahren nach einem beliebigen der vorhergehenden Ansprüche, bei dem der oder die Brenner (401) veranlasst werden, gemäß einer Richtung quer zur Strömungsrichtung der Rauchgase (1) auszustoßen.

6. Verfahren nach einem beliebigen der vorhergehenden Ansprüche, bei dem der Staubgehalt an einem Schornstein (601) zur endgültigen Verteilung der Rauchgase (1) gemessen wird.

7. Verfahren nach einem beliebigen der vorhergehenden Ansprüche, bei dem der Referenzwert an Sauerstoff 11 Vol.-% an Sauerstoff beträgt.

## Claims

1. Process for the regeneration of a denitrification catalyst, in which while fumes to be denitrified (1), which have a temperature in the range of between 170°C and 280°C, and into which a denitrification reagent (2) is fed, are passed through the catalyst to be regenerated, the temperature of these fumes is increased to a value in the range of between 240°C and 380°C by means of at least one burner (401) until the dust content, which is constantly measured downstream of the catalyst, has successively passed above and then below 20 mg/Nm³ sees., measured in normal temperature and pressure conditions and corrected to an oxygen reference value.

2. Process for the regeneration of a denitrification catalyst, in which while fumes to be denitrified (1), which have a temperature in the range of between 170°C and 280°C, and into which a denitrification reagent (2) is fed, are passed through the catalyst to be regenerated, the temperature of these fumes is increased to a value in the range of between 240°C and 380°C by means of at least one burner (401) until the dust content, which is permanently measured downstream of the catalyst, has successively passed above and then below 10 mg/Nm³ sees., measured in normal temperature and pressure conditions and corrected to an oxygen reference value.

3. Process according to one of claims 1 or 2, in which the fumes to be denitrified (1) have a temperature in the range of between 210°C and 280°C, preferably between 220°C and 250°C, and in which the temperature of these fumes is increased to a value in the range of between 280° and 380°C.

4. Process according to any one of the preceding claims, in which the burner or burners (401) is/are supplied with propane, butane, natural gas or fuel oil.

5. Process according to any one of the preceding claims, in which the burner or burners (401) are caused to blow in a transverse direction to the flow direction of the fumes (1).

6. Process according to any one of the preceding claims, in which the dust content is measured at the level of a final dispersion stack (601) of the fumes (1).

7. Process according to any one of the preceding claims, in which the oxygen reference value is 11% oxygen by volume.
